# EUROPÄISCHE PATENTSCHRIFT

(11) **EP 0 722 543 B1**
(45) Veröffentlichungstag und Bekanntmachung des Hinweises auf die Patenterteilung: **07.01.1998**
(21) Anmeldenummer: 94925454.4
(22) Anmeldetag: 12.08.1994
(51) Int. Cl.: F16D 65/04

(54) **BREMSKLOTZ FÜR SCHEIBENBREMSEN**
BRAKE PAD FOR DISC BRAKES
PLAQUETTE POUR FREINS A DISQUE

(30) Priorität: 13.10.1993 DE 4334840
(43) Veröffentlichungstag der Anmeldung: 24.07.1996
(73) Patentinhaber: ITT Automotive Europe GmbH, 60488 Frankfurt (DE); Leidecker, Hans-Dieter, D-65931 Fankfurt am Main (DE); Musolf, Jürgen, D-60323 Frankfurt am Main (DE)
(72) Erfinder: LEIDECKER, Hans-Dieter, D-65931 Frankfurt am Main (DE); MUSOLF, Jürgen, D-60323 Frankfurt am Main (DE)
(74) Vertreter: Grau, Ulf
(86) Internationale Anmeldenummer: EP9402693
(87) Internationale Veröffentlichungsnummer: WO9510713

(56) Entgegenhaltungen:
- EP-A- 0 347 523
- DE-A- 2 919 537
- DE-A- 2 926 818
- DE-A- 4 002 863
- DE-U- 7 803 310
- FR-A- 2 606 107

## Beschreibung

Die Erfindung betrifft einen Bremsbelag für Scheibenbremsen gemäß dem Oberbegriff des Patentanspruchs 1 und eine Schwimmsattel-Scheibenbremse mit einem erfindungsgemäßen Bremsbelag.

Ein gattungsgemäßer Bremsbelag ist aus der DE 78 03 310 U1 bekannt. Dieser bekannte Bremsbelag besitzt zwei seitlich abstehende, hammerkopfförmige Führungsteile, an denen der Bremsbelag abgestützt und geführt wird. Die zugehörige Schwimmsattel-Scheibenbremse besitzt einen Bremsträger mit über den Rand einer Bremsscheibe ragenden Trägerarmen. Die Trägerarme sind mit Führungsflächen zur Anlage der Führungsteile der Bremsbeläge versehen. Die Bremsbeläge werden dabei sowohl auf der Bremsscheibeneinlaufseite ziehend als auch auf der Bremsscheibenauslaufseite drückend abgestützt. Die Führungsflächen für die ziehende Abstützung sind radial innerhalb des Bremsscheibenrandes angeordnet. Aus diesem Grund können sich diese Führungsflächen auf jeder Axialseite nur bis in die Nähe der Bremsscheibe erstrecken und es ist nicht möglich, eine von der inneren bis zur äußeren Axialseite durchgehende Führungsfläche für beide Bremsbeläge vorzusehen. Dabei besteht aber die Gefahr, daß die Rückenplatten verschlissener Bremsbeläge in axialer Richtung auf die Bremsscheibe zu von den Führungsflächen abgleiten und im Extremfall der Bremsbelag herausfallen könnte.

Zur Vermeidung dieses Nachteils verwendet man Rückenplatten, deren Dicke deutlich größer ist als der zwischen Bremsscheibe und Führungsflächen der Trägerarme verbliebene axiale Abstand. Bei einem anderen, aus der DE 40 02 863 A1 bekannten Bremsbelag sind die hammerkopfförmigen Führungsteile in axialer Richtung gekröpft, so daß sie auch bei verschlissenen Reibbelägen noch an den Führungsflächen des Bremsträgers anliegen. Durch die Kröpfung werden aber genauso wie durch eine dickere Rückenplatte die Herstellungskosten für den Bremsbelag erhöht.

Aufgabe der Erfindung ist es, einen Bremsbelag für Scheibenbremsen anzugeben, der auch bei verschlissenem Reibbelag gegen radiales Herausfallen gesichert ist und dennoch kostengünstig zu fertigen ist.

Die Lösung der Aufgabe ergibt sich aus dem kennzeichnenden Teil des Patentanspruchs 1. Im Prinzip besteht die Lösung darin, die Führungsteile jeweils mit einer zusätzlichen Sicherungsnase zu versehen, für deren Herstellung keine zusätzlichen Kosten anfallen. Der besondere Vorteil dieser Maßnahme besteht darin, daß die Trägerarme der zugehörigen Schwimmsattel-Scheibenbremse nicht oder nur geringfügig modifiziert werden müssen, wobei wiederum keine wesentlichen Zusatzkosten anfallen. Dies gilt insbesondere, wenn gemäß Anspruch 2 die Sicherungsnasen an den äußeren Ecken der Führungsteile schräg angeordnet sind und auch in radialer Richtung abstehen. In diesem Bereich ist bei bekannten Schwimmsattel-Scheibenbremsen ohnehin ein Zwischenraum vorgesehen.

In einer bevorzugten Ausführungsform gemäß Anspruch 3 wird der Bremsbelag mittels innerer radialer Abstützflächen in Richtung auf die Radachse zu radial abgestützt. Um das Zusammentreffen dieser radialen Abstützflächen mit der senkrecht dazu angeordneten Ankerfläche in einer scharfen Kante zu vermeiden, ist gemäß Anspruch 4 im Übergangsbereich eine bogenförmige Ausbuchtung vorgesehen, durch die die auftretenden mechanischen Spannungen erheblich reduziert werden und die Bruchgefahr gebannt wird.

Radiale Abstützflächen können aber auch gemäß Anspruch 5 an den Sicherungsnasen selbst vorgesehen werden, so daß die inneren radialen Abstützflächen nach Anspruch 3 wegfallen und durch eine vergrößerte bogenförmige Ausbuchtung ersetzt werden können.

Wenn der Bremsbelag auf der axialen Außenseite einer Schwimmsattel-Scheibenbremse verwendet werden soll, empfiehlt sich eine Ausführungsform gemäß Anspruch 6, bei der eine äußere radiale Auflagefläche für die Auflage des Schwimmsattels vorgesehen ist.

Die erfindungsgemäßen Sicherungsnasen sind optimal dimensioniert, wenn sie gemäß Anspruch 7 um einen der Dicke der Rückenplatte entsprechenden Betrag seitlich abstehen. Dabei können gemäß Anspruch 8 die Rückenplatten eines erfindungsgemäßen Bremsbelags vorteilhaft dünn ausgeführt sein, da ja nicht mehr die Dicke der Rückenplatte zur Sicherung gegen radiales Herausfallen dient.

Die Ansprüche 9 bis 13 beziehen sich auf eine Schwimmsattel-Scheibenbremse, die mit erfindungsgemäßen Bremsbelägen versehen und durch vorteilhafte Maßnahmen für die Verwendung dieser Bremsbeläge besonders geeignet ist. Die beschriebenen Merkmale können insbesondere vorteilhaft angewendet werden bei herkömmlichen Schwimmsattel-Scheibenbremsen, die zur Verwendung erfindungsgemäßer Bremsbeläge angepaßt werden sollen.

So ist es erforderlich, daß gemäß Anspruch 9 die Trägerarme mit Ausnehmungen versehen sind, in die die Sicherungsnasen eingreifen können. Dabei ist es nicht notwendig, daß die Sicherungsnasen gemäß Anspruch 13 an den Trägerarmen anliegen. Vielmehr ist es vorteilhaft, gemäß Anspruch 10 die Sicherungsnasen im Normalfall nicht an den Trägerarmen anliegen zu lassen. Die Ausnehmungen der Trägerarme können in diesem Fall einfach beim Gießen ohne zusätzliche Fertigungskosten angeformt werden. Die gegossene Oberfläche muß hier nicht kostenintensiv bearbeitet werden, da es sich nicht um eine Führungsfläche handelt. Nur im Notfall, wenn der Bremsbelag von der eigentlichen Führungsfläche abrutscht, verhindern die Sicherungsnasen durch Anlage an einer Fläche der Ausnehmung ein radiales Herausfallen des Bremsbelags.

Wenn ein bereits bestehender Bremsträger zur Verwendung in einer erfindungsgemäßen Schwimmsattel-Scheibenbremse modifiziert wird, ist es vorteilhaft, gemäß Anspruch 11 den aufgrund der Ausnehmung geschwächten Querschnitt der Trägerarme durch Zufügen von Material auf der Außenseite in Form von Rippen wieder zu verstärken. Die erforderliche Modifikation der Trägerarme fällt vorteilhaft gering aus, wenn gemäß Anspruch 12 die Ausnehmung als einfache Abschrägung ausgestaltet ist.

Ausführungsbeispiele werden nachfolgend anhand der Zeichnungen näher erläutert.

Es zeigen:
- Figur 1:: eine Draufsicht auf eine Teilbelag-Scheibenbremse mit erfindungsgemäßen Bremsbelägen,
- Figur 2 :: eine teilweise geschnittene Seitenansicht einer Teilbelag-Scheibenbremse mit erfindungsgemäßen Bremsbelägen,
- Figur 3 :: eine Draufsicht auf die Rückseite eines Bremsbelags, der zur Verwendung auf der äußeren Axialseite der Scheibenbremse von Figur 2 bestimmt ist,
- Figur 4 :: eine Draufsicht auf die Vorderseite eines Bremsbelags, der zur Verwendung auf der inneren Axialseite der Bremse von Figur 2 bestimmt ist,
- Figur 5 :: einen vergrößerten Ausschnitt der rechten Seite von Figur 2,
- Figur 6 :: einen vergrößerten Ausschnitt der linken Seite von Figur 2,
- Figur 7:: einen Ausschnitt einer anderen Scheibenbremse mit einer weiteren Ausführungsform eines erfindungsgemäßen Bremsbelags.

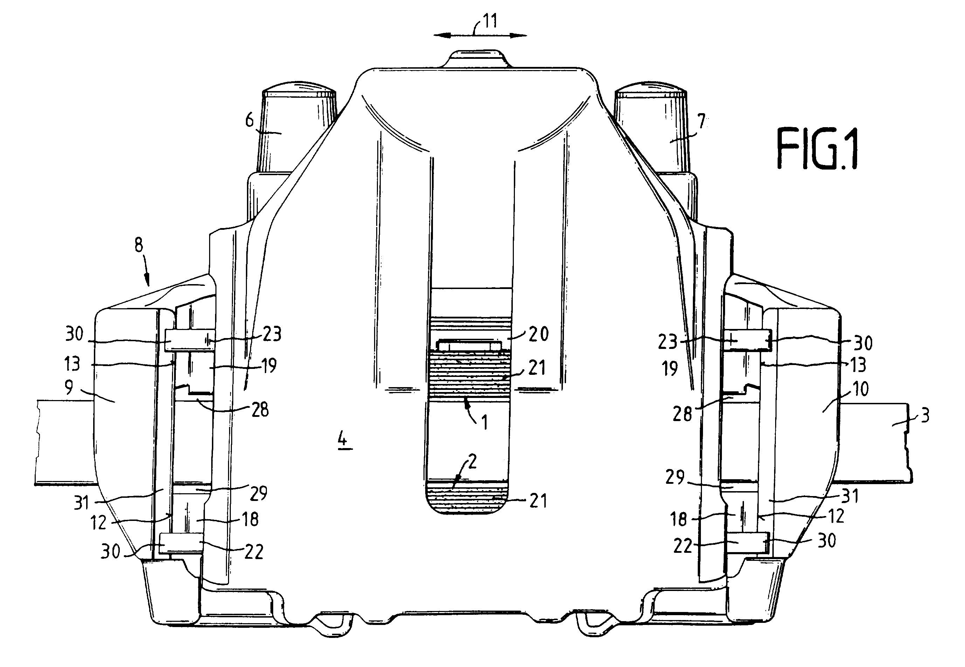

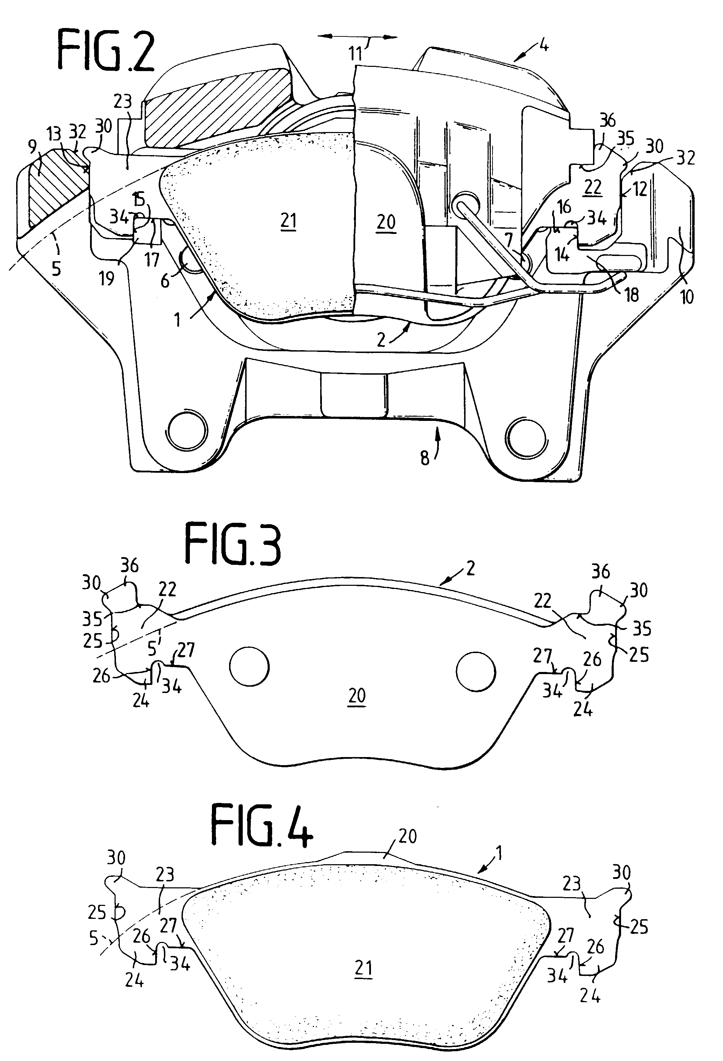

In den Figuren 1 und 2 erkennt man eine Schwimmsattel-Scheibenbremse mit erfindungsgemäßen Bremsbelägen 1,2, die beiderseits einer Bremsscheibe 3 angeordnet sind. Ein Schwimmsattel 4 umgreift den durch Strichelung angedeuteten Bremsscheibenrand 5 und die Bremsbeläge 1,2, um diese an die Bremsscheibe 3 anzudrücken. Der Schwimmsattel 4 ist mittels zweier Bolzenführungen 6,7 an einem Bremsträger 8 axial verschiebbar gelagert. Der Bremsträger 8 besitzt zwei über den Bremsscheibenrand 5 ragende Trägerarme 9,10, die zu beiden Axialseiten der Bremsscheibe 3 benachbarte und in Sekantenrichtung 11 paarweise gegenüberliegende Führungsflächen 12,13,14,15,16,17 zur Führung und Abstützung der Bremsbeläge 1,2 aufweisen. Dabei sind erste Führungsflächen 12,13 der Bremsenmitte zugewandt, zweite Führungsflächen 14,15 in jeweils entgegengesetzte Richtungen gewandt und zusammen mit senkrecht dazu angeordneten dritten Führungsflächen 16,17 an hakenförmigen Abschnitten 18,19 der Trägerarme 9,10 angeordnet.

Wie man am besten in den Figuren 3 und 4 erkennt, besitzt ein erfindungsgemäßer Bremsbelag 1,2 eine Rückenplatte 20, auf der ein Reibbelag 21 befestigt ist. Von der Rückenplatte 20 stehen seitlich in entgegengesetzte Sekantenrichtungen 11 zwei Führungsteile 22,23 ab, die jeweils einen radial nach innen abgewinkelten Ankerabschnitt 24 aufweisen, und an ihren Schmalseiten mit Abstützflächen 25,26,27 versehen sind. Dabei liegen jeweils die beiden in Sekantenrichtung 11 nach außen gewandten Stirnflächen 25 der Führungsteile 22,23 an den ersten Führungsflächen 12,13 und die nach innen gewandten Ankerflächen 26 an den zweiten Führungsflächen 14,15 der Trägerarme 9,10 an. Die inneren radialen Abstützflächen 27 liegen in radialer Richtung an den dritten Führungsflächen 16,17 an, die an den hakenförmigen Abschnitten 18,19 der Trägerarme 9,10 ausgebildet sind.

Beim Bremsen werden die Bremsbeläge 1,2 von der Reibkraft in Umfangsrichtung der Bremsscheibe 3 mitgenommen, wobei die auf der Auslaufseite der Bremsscheibe 3 befindlichen Stirnflächen 25 gegen die ersten Führungsflächen 12 und 13 gedrückt werden. Dabei stützt sich der Bremsbelag 1,2 drückend an den im Auslauf der Bremsscheibe 3 befindlichen Führungsteil 22,23 ab. Die anderen beiden Führungsteile 22,23, die sich auf der anderen Seite im Einlauf der Bremsscheibe 3 befinden, legen sich mit ihren Ankerflächen 26 an die zweiten Führungsflächen 14,15 an, wobei der jeweilige Bremsbelag 1 bzw. 2 ziehend abgestützt wird.

Um ein Ausheben der Bremsbeläge 1,2 beim Bremsen aufgrund der durch die Bremsscheibe 3 erzeugten Umfangskräfte und Drehmomente zu verhindern, sind die ersten Führungsflächen 12,13 der Trägerarme 9,10 und die Stirnflächen 25 der Führungsteile 22,23 radial außerhalb des Bremsscheibenrandes 5 angeordnet. Aus demselben Grund sind die zweiten Führungsflächen 14,15 der Trägerarme 9,10 und die zugehörigen Ankerflächen 26 der Führungsteile 22,23 radial innerhalb des Bremsscheibenrandes 5 angeordnet. Ebenfalls innerhalb des Bremsscheibenrandes 5 sind die dritten Führungsflächen 16,17 der Trägerarme 9,10 zur Abstützung der inneren radialen Abstützflächen 27 der Bremsbeläge 1,2 angeordnet.

Die ersten Führungsflächen 12,13 können aufgrund ihrer Lage ebensogut als eine durchgehende Führungsfläche 12,13 ausgestaltet werden. Dies ist bei den zweiten Führungsflächen 14,15 und den dritten Führungsflächen 16,17 nicht möglich, da sie nicht die Bremsscheibe 3 durchdringen können. Vielmehr müssen die zweiten Führungsflächen 14,15 und die dritten Führungsflächen 16,17 in axialer Richtung kurz vor Erreichen der Bremsscheibe 3 enden, so daß ein geringer axialer Zwischenraum 28,29 für die Bewegung der Bremsscheibe 3 verbleibt.

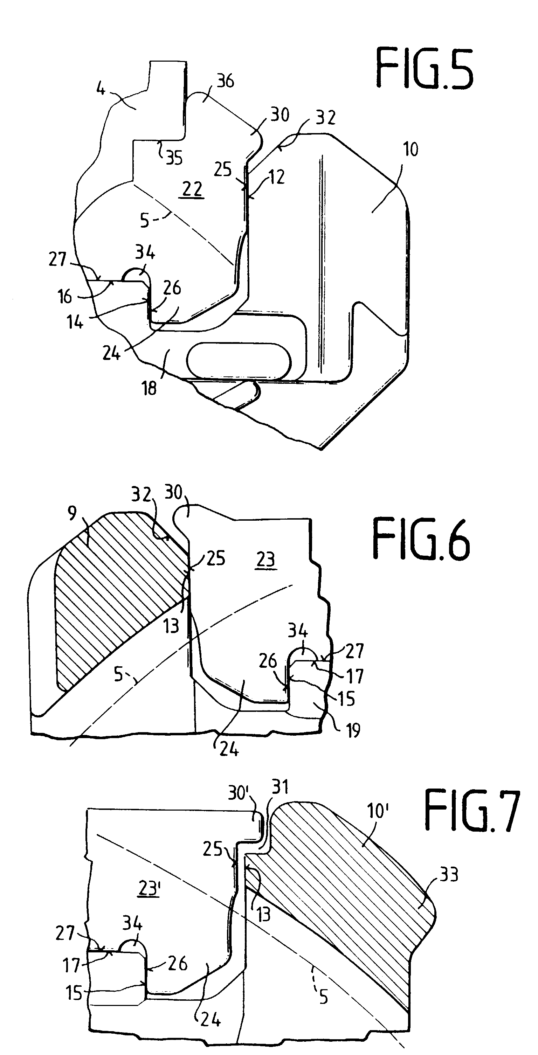

Bei zunehmendem Verschleiß der Reibbeläge 21 wandern die Rückenplatten 20 axial in Richtung Bremsscheibe 3, bis sie die axialen Zwischenräume 28,29 erreichen. Hier besteht nun die Gefahr, daß die Bremsbeläge 1,2 mit ihren inneren radialen Abstützflächen 27 der Rückenplatten 20 über das Ende der dritten Führungsflächen 16,17 der hakenförmigen Abschnitte 18,19 hinausrutschen und anschließend in radialer Richtung nach innen auf die Bremsscheibenachse zu aus der Bremse herausfallen. Zur Vermeidung eines solchen Totalausfalls der Bremse sind die Führungsteile 22,23 der Rückenplatten 20 mit zusätzlichen Sicherungsnasen 30 versehen, die in entgegengesetzte Sekantenrichtungen 11 über die Stirnflächen 25 hinausragen. Im Bereich dieser Sicherungsnasen 30 sind die Trägerarme 9,10 jeweils mit einer axial verlaufenden an die ersten Führungsflächen 12,13 angrenzenden Ausnehmung 31 versehen, die in den Figuren 2, 5 und 6 als Abschrägung 32 ausgestaltet ist. Die Ausnehmungen 31 bzw. Abschrägungen 32 verlaufen von der inneren Axialseite über den Bremsscheibenrand 5 bis zur äußeren Axialseite fast über die gesamte axiale Länge der Trägerarme 9,10 und reichen bis in den Bereich der axial inneren ersten Führungsflächen 13 als auch bis in den Bereich der axial äußeren ersten Führungsflächen 12. Die Sicherungsnasen 30 greifen zwar in die Ausnehmungen 31,32 ein, berühren jedoch im normalen Betrieb nicht die Trägerarme 9,10. Nur wenn der oben beschriebene Notfall auftritt, stützen sich die Sicherungsnasen 30 an den Trägerarmen 9,10 ab und verhindern ein Herausfallen der Bremsbeläge 1,2 aus der Bremse.

Wenn die Trägerarme 9,10 mit einer Abschrägung 32 versehen sind, empfiehlt sich die in den meisten Figuren dargestellte schräge Anordnung der Sicherungsnasen 30 an den äußeren Ecken der Führungsteile 22,23. Bei dem in Figur 7 gezeigten Ausführungsbeispiel ragen die geringfügig modifizierten Sicherungsnasen 30' genau nur in Sekantenrichtung 11 über die Stirnflächen 25 der modifizierten Führungsteile 23' hinaus. Der modifizierte Trägerarm 10' ist mit einer Rippe 33 verstärkt, um das in der Ausnehmung 31 weggenommene Material wieder hinzuzufügen und die Stärke des ursprünglichen Querschnitts wiederherzustellen.

Die erfindungsgemäßen Sicherungsnasen 30 machen eine große Dicke der Rückenplatten 20 zur Sicherung gegen radiales Herausfallen überflüssig, so daß die Rückenplatten 20 eine für ihre Fertigungskosten günstige geringe Dicke aufweisen können. Um bei starker Belastung ein Einreißen der Führungsteile 22,23 an der Schnittkante der Ankerflächen 26 und der inneren radialen Abstützflächen 27 zu vermeiden, sind die Führungsteile 22,23 an dieser Stelle jeweils mit einer bogenförmigen Ausbuchtung 34 versehen.

Der Schwimmsattel 4 stützt sich auf seiner axialen Außenseite an dem äußeren Bremsbelag 2 ab. Für diesen Zweck sind die Führungsteile 22 des Bremsbelags 2 zusätzlich mit äußeren radialen Auflageflächen 35 zur Auflage des Schwimmsattels 4 versehen. Um den Schwimmsattel 4 auch in Sekantenrichtung 11 abzustützen, besitzen die Führungsteile 22 des äußeren Bremsbelags 2 zusätzliche Stütznasen 36.

## Patentansprüche

1. Bremsbelag für Scheibenbremsen, mit einer Rückenplatte (20), die einen Reibbelag (21) trägt und seitlich in zwei bezüglich einer Bremsscheibe (3) in entgegengesetzte Sekantenrichtungen (11) abstehende, reibbelagfreie Führungsteile (22,23) übergeht, die jeweils einen radial nach innen abgewinkelten Ankerabschnitt (24) aufweisen und an ihren Schmalseiten mit Abstützflächen (25,26,27) versehen sind, wobei in Sekantenrichtung (11) nach außen gewandte Stirnflächen (25) der Führungsteile (22,23) radial außerhalb des Bremsscheibenrandes (5) und zu den Stirnflächen (25) parallele, aber nach innen gewandte Ankerflächen (26) der Ankerabschnitte (24) radial innerhalb des Bremsscheibenrandes (5) angeordnet sind, so daß der Bremsbelag (1,2) über das auf der Einlaufseite der Bremsscheibe (3) befindliche Führungsteil (22,23) ziehend und über das andere Führungsteil (22,23) drückend abgestützt werden kann, dadurch **gekennzeichnet,** daß die Führungsteile (22,23) jeweils eine zusätzliche Sicherungsnase (30) aufweisen, die radial außerhalb des Bremsscheibenrandes (5) angeordnet ist und in Sekantenrichtung (11) über die Stirnflächen (25) hinausragt.

2. Bremsbelag nach Anspruch 1, dadurch **gekennzeichnet,** daß die Sicherungsnasen (30) an den äußeren Ecken der Führungsteile (22,23) schräg angeordnet sind und auch in radialer Richtung abstehen.

3. Bremsbelag nach Anspruch 1 oder 2, dadurch **gekennzeichnet,** daß eine radial innerhalb des Bremsscheibenrandes (5) angeordnete, der Bremsscheibenachse zugewandte Schmalseite der Führungsteile (22,23) eine innere radiale Abstützfläche (27) aufweist, die neben dem Ankerabschnitt (24) senkrecht zur Ankerfläche (26) angeordnet ist.

4. Bremsbelag nach Anspruch 3, dadurch **gekennzeichnet,** daß die radiale Abstützfläche (27) über eine bogenförmige Ausbuchtung (34) in die Ankerfläche (26) übergeht.

5. Bremsbelag nach Anspruch 1, dadurch **gekennzeichnet,** daß eine radiale Abstützfläche an der Sicherungsnase (30) vorgesehen ist.

6. Bremsbelag nach einem der Ansprüche 1 bis 5, dadurch **gekennzeichnet,** daß eine radial außerhalb des Bremsscheibenrandes (5) angeordnete Schmalseite der Führungsteile (22) eine äußere radiale Auflagefläche (35) für die Auflage eines Schwimmsattels (4) einer Schwimmsattel-Scheibenbremse aufweist.

7. Bremsbelag nach einem der Ansprüche 1 bis 6, dadurch **gekennzeichnet,** daß die Abmessungen der Sicherungsnasen (30) im wesentlichen der Dicke der Rückenplatten (20) entsprechen.

8. Bremsbelag nach Anspruch 7, dadurch **gekennzeichnet,** daß die Dicke der Rückenplatte (20) höchsten 4 mm beträgt.

9. Schwimmsattel-Scheibenbremse mit Bremsbelägen nach einem der Ansprüche 1 bis 8, mit einem den Bremsscheibenrand (5) und die Bremsbeläge (1,2) umgreifenden Schwimmsattel (4), der an einem Bremsträger (8) axial verschiebbar gelagert ist, mit zwei über den Bremsscheibenrand (5) ragenden Trägerarmen (9,10) des Bremsträgers (8), die zu beiden Axialseiten der Bremsscheibe (3) benachbarte Führungsflächen (12,13,14,15,16,17) zur Führung und Abstützung der Bremsbeläge (1,2) aufweisen, wobei jeweils paarweise gegenüberliegende, der Bremsenmitte zugewandte erste Führungsflächen (12,13) der Trägerarme (9,10) zur Anlage der Stirnflächen (25) und radial innerhalb des Bremsscheibenrandes (5) an hakenförmigen Abschnitten (18,19) der Trägerarme (9,10) angeordnete zweite Führungsflächen (14,15) zur Anlage der Ankerflächen (26) sowie dritte Führungsflächen (16,17) zur Anlage der inneren radialen Abstützflächen (27) der Führungsteile (22,23) vorgesehen sind, dadurch **gekennzeichnet,** daß die Trägerarme (9,10) je eine axial verlaufende, den ersten Führungsflächen (12,13) benachbarte Ausnehmung (31) aufweisen, die sich über den Bremsscheibenrand (5) beiderseits bis in den Bereich der Bremsbeläge (1,2) erstreckt, und daß die Sicherungsnasen (30) in die Ausnehmungen (31) eingreifen.

10. Scheibenbremse nach Anspruch 9, dadurch **gekennzeichnet,** daß die Sicherungsnasen (30) die Trägerarme (9,10) nur im Notfall berühren, wenn die inneren radialen Abstützflächen (27) der Führungsteile (22,23) des Bremsbelags (1,2) von den dritten Führungsflächen (16,17) der hakenförmigen Abschnitte (18,19) der Trägerarme (9,10) abrutschen.

11. Scheibenbremse nach Anspruch 9 oder 10, dadurch **gekennzeichnet,** daß der aufgrund der Ausnehmungen (31) geschwächte Querschnitt der Trägerarme (9,10) durch Zufügen von Material auf der Außenseite der Trägerarme (9,10) in Form von Rippen (33) verstärkt wird.

12. Scheibenbremse nach einem der Ansprüche 9 bis 11, dadurch **gekennzeichnet,** daß die Ausnehmung (31) als einfache Abschrägung (32) ausgebildet ist.

13. Scheibenbremse nach Anspruch 9, dadurch **gekennzeichnet,** daß die Sicherungsnasen (30) mit radialen Abstützflächen versehen sind, die im Bereich der Ausnehmungen (31) auf den Trägerarmen (9,10) radial aufliegen.

## Claims

1. A brake pad for disc brakes, including a backplate (20) which carries a friction lining (21) and laterally passes over into two guide portions (22, 23) without friction lining which project in opposed secant directions (11) with respect to a brake disc (3), each of the guide portions having a radially inwardly deflected anchoring portion (24) and supporting surfaces (25, 26, 27) on their narrow sides, and, in the secant direction (11), outwardly facing end surfaces (25) of the guide portions (22, 23) are arranged radially outside the brake disc edge (5), and anchoring surfaces (26) of the anchor portions (24), which are in parallel to the end surfaces (25) but are inwardly directed, are arranged radially within the brake disc edge (5) so that the brake pad (1, 2) can be supported so as to be pulled by way of the guide portion (22, 23) disposed on the leading end of the brake disc (3) and so as to be pushed by way of the other guide portion (22, 23),
**characterized** in that each of the guide portions (22, 23) has an additional safety lug (30) which is arranged radially outside the brake disc edge (5) and projects from the end surfaces (25) in the secant direction (11).

2. A brake pad as claimed in claim 1,
**characterized** in that the safety lugs (30) are arranged transversely on the external corners of the guide portions (22, 23) and also project in a radial direction.

3. A brake pad as claimed in claim 1 or claim 2,
**characterized** in that a narrow side of the guide portions (22, 23), which is arranged radially inside the brake disc edge (5) and faces the brake disc axis, has an inner radial supporting surface (27) which is positioned beside the anchor portion (24) vertically to the anchoring surface (26).

4. A brake pad as claimed in claim 3,
**characterized** in that the radial supporting surface (27) passes over into the anchoring surface (26) by way of an arcuate bulge (34).

5. A brake pad as claimed in claim 1,
**characterized** in that a radial supporting surface is provided on the safety lug (30).

6. A brake pad as claimed in any one of claims 1 to 5,
**characterized** in that a narrow side of the guide portions (22), which is positioned radially outside the brake disc edge (5), has an outer radial abutment surface (35) for support of a floating caliper (4) of a floating-caliper disc brake.

7. A brake pad as claimed in any one of claims 1 to 6,
**characterized** in that the dimensions of the safety lugs (30) substantially correspond to the thickness of the backplates (20).

8. A brake pad as claimed in claim 7,
**characterized** in that the maximal thickness of the backplate (20) amounts to 4 millimeters.

9. A floating-caliper disc brake with brake pads as claimed in any one of claims 1 to 8, including a floating caliper (4) which straddles the brake disc edge (5) and the brake pads (1, 2) and is supported so as to be axially movable on a brake carrier (8), two carrier arms (9, 10) of the brake carrier (8) which project over the brake brake disc edge (5) and have adjacent guide surfaces (12, 13, 14, 15, 16, 17) on either axial side of the brake disc (3) to guide and support the brake pads (1, 2), wherein first guide surfaces (12, 13) of the carrier arms (9, 10), which are opposite each other in pairs and face the brake middle, are provided for abutment of the end surfaces (25), and second guide surfaces (14, 15) which are arranged on hook-shaped portions (18, 19) of the carrier arms (9, 10) radially within the brake disc edge (5) are provided for abutment of the anchoring surfaces (26), and third guide surfaces (16, 17) are provided for abutment of the inner radial supporting surfaces (27) of the guide portions (22, 23), **characterized** in that each of the carrier arms (9, 10) has an axially extending recess (31) adjacent to the first guide surfaces (12, 13) which extends on either side over the brake disc edge (5) until proximate the brake pads (1, 2), and in that the safety lugs (30) engage the recesses (31).

10. A disc brake as claimed in claim 9,
**characterized** in that the safety lugs (30) touch the carrier arms (9, 10) only in an emergency, if the inner radial supporting surfaces (27) of the guide portions (22, 23) of the brake pad (1, 2) slip off the third guide surfaces (16, 17) of the hook-shaped portions (18, 19) of the carrier arms (9, 10).

11. A disc brake as claimed in claim 9 or claim 10,
**characterized** in that the cross-section of the carrier arms (9, 10), which is weakened by the recesses (31), is reinforced by adding material in the form of ribs (33) on the outside surface of the carrier arms (9, 10).

12. A disc brake as claimed in any one of claims 9 to 11,
**characterized** in that the recess (31) is a simple chamfer (32).

13. A disc brake as claimed in claim 9,
**characterized** in that the safety lugs (30) have radial supporting surfaces which abut radially on the carrier arms (9, 10) proximate the recesses (31).

## Revendications

1. Garniture de frein pour frein à disque, comprenant une plaquette de support (20) qui porte une garniture de friction (21) et se prolonge latéralement par deux parties de guidage (22, 23) dépourvues de garnitures de friction qui font saillie dans des directions tangentielles opposées (11) vis-à-vis d'un disque de frein (3) et qui comportent chacune une section d'ancrage (24) coudée radialement vers l'intérieur et sont pourvues de surfaces d'appui (25, 26, 27) sur leurs côtés étroits, des surfaces frontales (25) des parties de guidage (22, 23) faisant face vers l'extérieur suivant la direction tangentielle (11) étant disposées radialement à l'extérieur vis-à-vis du bord de disque de frein (5) et des surfaces d'ancrage (26) des sections d'ancrage (24) parallèles aux surfaces frontales (25), mais faisant face vers l'intérieur étant disposées radialement à l'intérieur vis-à-vis du bord de disque de frein (5), de sorte que la garniture de frein (1, 2) peut être mise en appui par la partie de guidage (22, 23) située du côté d'entrée du disque de frein (3) en travaillant à la traction et par l'autre partie de guidage (22, 23) en travaillant à la compression, caractérisée en ce que les parties de guidage (22, 23) comportent chacune un talon d'arrêt (30) supplémentaire qui est disposé radialement à l'extérieur vis-à-vis du bord de disque de frein (5) et fait saillie au-delà des surfaces frontales (25) suivant la direction tangentielle (11).

2. Garniture de frein selon la revendication 1, caractérisée en ce que les talons d'arrêt (30) sont disposés d'une manière inclinée sur les coins extérieurs des parties de guidage (22, 23) et font aussi saillie suivant la direction radiale.

3. Garniture de frein selon la revendication 1 ou 2, caractérisée en ce qu'un côté étroit des parties de guidage (22, 23) qui est disposé radialement à l'intérieur vis-à-vis du bord de disque de frein (5) et fait face à l'axe de disque de frein comporte une surface intérieure d'appui radial (27) qui est disposée perpendiculairement à la surface d'ancrage (26) à côté de la section d'ancrage (24).

4. Garniture de frein selon la revendication 3, caractérisée en ce que la surface d'appui radial (27) se raccorde à la surface d'ancrage (26) par une partie évidée (34) en forme d'arc.

5. Garniture de frein selon la revendication 1, caractérisée en ce qu'il est prévu une surface d'appui radial sur le talon d'arrêt (30).

6. Garniture de frein selon l'une des revendications 1 à 5, caractérisée en ce qu'un côté étroit des parties de guidage (22) qui est disposé radialement à l'extérieur vis-à-vis du bord de disque de frein (5) comporte une surface extérieure d'appui radial (35) pour l'appui d'un étrier flottant (4) d'un frein à disque à étrier flottant.

7. Garniture de frein selon l'une des revendications 1 à 6, caractérisée en ce que les dimensions des talons d'arrêt (30) sont pratiquement égales à l'épaisseur des plaquettes de support (20).

8. Garniture de frein selon la revendication 7, caractérisée en ce que l'épaisseur de la plaquette de support (20) est égale au maximum à 4 mm.

9. Frein à disque à étrier flottant comportant des garnitures de frein selon l'une des revendications 1 à 8, comprenant un étrier flottant (4), qui entoure le bord de disque de frein (5) et les garnitures de frein (1, 2) et est monté d'une manière coulissante axialement sur un support de frein (8), et comprenant deux bras de support (9, 10) du support de frein (8) qui font saillie par-dessus le bord de disque de frein (5) et comportent des surfaces de guidage (12, 13, 14, 15, 16, 17) voisines des deux faces axiales du disque de frein (3) et servant au guidage et à l'appui des garniture de frein (1, 2), en prévoyant des premières surfaces de guidage (12, 13) des bras de support (9, 10) se faisant face deux à deux et tournées vers le milieu du frein, qui servent à l'appui des surfaces frontales (25), et des secondes surfaces de guidage (14, 15) disposées radialement à l'intérieur vis-à-vis du bord de disque de frein (5) sur des sections en forme de crochet (18, 19) des bras de support (9, 10), qui servent à l'appui des surfaces d'ancrage (26), ainsi que des troisièmes surfaces de guidage (16, 17) servant à l'appui des surfaces intérieures d'appui radial (27) des parties de guidage (22, 23), caractérisé en ce que les bras de support (9, 10) comportent chacun une partie en retrait (31) qui est orientée axialement et est voisine des premières surfaces de guidage (12, 13) et qui s'étend par-dessus le bord de disque de frein (5), des deux côtés et jusque dans la zone des garnitures de frein (1, 2), et en ce que les talons d'arrêt (30) pénètrent dans les parties en retrait (31).

10. Frein à disque selon la revendication 9, caractérisé en ce que les talons d'arrêt (30) ne viennent au contact des bras de support (9, 10) que dans une situation de secours, lorsque les surfaces intérieures d'appui radial (27) des parties de guidage (22, 23) de la garniture de frein (1, 2) glissent des troisièmes surfaces de guidage (16, 17) des sections en forme de crochet (18, 19) des bras de support (9, 10).

11. Frein à disque selon la revendication 9 ou 10, caractérisé en ce que la section transversale des bras de support (9, 10), affaiblie du fait des parties en retrait (31), est renforcée par apport de matière, sous forme de nervures (33), sur le côté extérieur des bras de support (9, 10).

12. Frein à disque selon l'une des revendications 9 à 11, caractérisé en ce que la partie en retrait (31) est réalisée sous forme d'un simple bord tombé (32).

13. Frein à disque selon la revendication 9, caractérisé en ce que les talons d'arrêt (30) sont pourvus de surfaces d'appui radial qui prennent appui radialement sur les bras de support (9, 10) dans la zone des parties en retrait (31).
